# EUROPEAN PATENT SPECIFICATION

(11) **EP 4 458 583 B1**
(45) Date of publication and mention of the grant of the patent: **18.06.2025**
(21) Application number: 23171085.6
(22) Date of filing: 02.05.2023
(51) Int. Cl.: B41J 11/00, B23K 26/38, B41J 11/66, B26D 7/06, B26D 7/18, B26F 3/00, B41J 15/16

(54) **INDUSTRIAL PRINTING DEVICE AND INDUSTRIAL PRINTING PROCESS**
INDUSTRIELLE DRUCKVORRICHTUNG UND INDUSTRIELLES DRUCKVERFAHREN
DISPOSITIF D'IMPRESSION INDUSTRIEL ET PROCÉDÉ D'IMPRESSION INDUSTRIEL

(43) Date of publication of application: 06.11.2024
(73) Proprietor: BOBST MEX SA, 1031 Mex (CH)
(72) Inventor: MANOUSAKIS, Stylianos, 10-308020 Barcelona (ES)
(74) Representative: Wagner, Sigrid

(56) References cited:
- US-A1- 2003 210 313
- US-A1- 2005 158 107
- US-A1- 2008 074 453
- US-A1- 2010 183 822

## Description

The present invention generally relates to an industrial printing device and an industrial printing process.

Industrial printing devices are known to continuously print material according to a predetermined layout at high printing speeds (professional printing speeds). The material is provided as a continuous web of material where only certain portions are printed. In order to extract the printed layouts from the remainder of the band of material, it is known to apply die-cutting tools subsequent to the printing process such that the material is cut. Optionally, a portion of the processed material may remain uncut (kiss cutting technique) for transportation purposes along the production line and a matrix layer may be removed to reveal only the final product on the release layer of the processed material. The die-cutting tools may either be implemented with the printing devices at separate die-cutting stages downstream of the printer stage or, in an alternative, the printed band of material may be provided to separate die-cutting devices, also called finishing devices.

However, industrial printing processes are applied for numerous different printing layouts. In this regard, separate tools are required to extract different printed layouts from the band of material since the layouts commonly are different from each other with regard to their specific shapes. This causes, firstly, manufacturing efforts to be invested in view of the differently shaped cutting tools and, secondly, downtimes of the printing devices or die-cutting devices (finishing devices) so as to change the underlying die-cutting tools. As a consequence, the manufacturing efficiency of the entire production process is limited.

As an alternative to common mechanic die-cutting processes, laser cutting tools are known nowadays. Therefore, some manufactures provide separate laser cutting tools (finishing tools) to which the printed material is provided subsequent to the printing process. However, in this case two separate devices are required. Also, the transfer of the printed band of material to the separate laser cutting devices is time consuming and requires repeated registration adjustments such that high investments for the separate devices are caused and the manufacturing efficiency is limited.

US 2017/0182807 A1 discloses a combined printing and laser cutting device. However, the laser cutting stage is arranged subsequent to the printing stage. Therefore, after cutting the underlying material cut edges are established which are not printed, i.e. not covered by any ink. As a consequence, the quality of the manufactured products, such as labels, is limited. Also US 2008/074453 A1 discloses relevant prior art for the present invention.

Accordingly, there is need for an industrial printing device which provides an improved quality of the printed products and which enables this improved quality to be achieved at low manufacturing efforts.

The objective technical problem to be solved may be considered to consist in overcoming or at least reducing the disadvantages according to the prior art. In particular, an industrial printing device is desired, which is capable of providing printed cut edges that are producible for various different printing layouts at low manufacturing expenses.

The problem is solved by the subject matter of the independent claims. Preferred embodiments are indicated within the dependent claims and the following description, each of which, individually or in combination, may represent aspects of the disclosure. Some specifics of the present disclosure are described with regard to devices and others with regard to corresponding methods. However, the advantages and preferred embodiments described with regard to the indicated devices are correspondingly to be transferred to the according methods and vice versa.

According to an aspect, an industrial printing device is provided. The industrial printing device comprises at least an input stage, an output stage, a cutting stage, and a printer stage. The printer stage is arranged between the input stage and the output stage. The cutting stage is arranged upstream of the printer stage. The industrial printing device is characterized in that the cutting stage comprises a laser cutting device such that material is continuously processable between the input stage and the output stage by at least the cutting stage and the printer stage.

Since the cutting stage is arranged upstream of the printer stage, the material is cut first and subsequently printed. This provides the possibility to also print edges of the cut material for high-quality printed layouts. Therefore, the industrial printer device is configured for a greater variety of applications, such as e.g. for high-quality wine labels having printed edges.

In addition, compared to classic mechanical die-cutting procedures, the laser cutting device ensures that a wide variety of cutting layouts may be guaranteed without the need of manufacturing different cutting tools in this regard. For example, also complex cutting layouts may be considered which, due to their complexity, may not be readily producible by mechanical die-cutting procedures. As another example, laser cutting devices are also capable of performing micro cuts and small step spacing such as for perforations, which is not readily achievable by mechanical die-cutting procedures at similar qualities. Also, a change from a first cutting layout to a different second cutting layout may be performed on-the-fly without any interruption of the procedure carried out by means of the industrial printing device.

Moreover, as the printer stage is arranged only after the cutting stage, the cutting device is not required to deal with varying material thicknesses. Put differently, if the material is printed first, a varying ink thickness is established on the material leading to an overall varying material thickness. However, the power used during laser-based cutting procedures is always desired to be optimized to the lowest possible value in order to avoid excessive local heating of the underlying materials during the cutting procedure as best as possible. Therefore, unwanted local burning effects can be avoided. Thus, if the material is not yet printed at the cutting stage, the cutting device may be operated at a homogeneous power since the material thickness is homogeneous and does not show any variations due to ink.

Since the material thickness is homogeneous when the material is treated at the cutting stage, the cutting procedure applied in view of the laser cutting device can be reliably performed from a side of the processed material which represents the front side of the later finished product. By cutting the processed material from the front side, sharp cut edges may be avoided which could generally occur if the laser cutting device is applied from the backside of the processed material. Therefore, the specific arrangement of the laser cutting device cutting the processed material from the front side ensures that the finished products may also comprise high-quality haptics properties.

In addition, a wide variety of adhesives and inks causes smoke and debris to be released by the cutting procedure if these substances are treated by a laser cutting device. Accordingly, arranging the printer stage subsequent to the cutting stage also assists in reducing the amount of smoke and debris to be released as the treated material is not yet printed when applying the cutting procedure.

These advantages are achieved by providing a single industrial printing device. This means that not two separate devices are required, such as a sole printing device and a sole finishing device, where only the finishing device includes a cutting stage. Accordingly, the production facility may require less space for carrying out the underlying procedure.

Within the present context, an industrial printing device may also be considered a professional printing device. In other words, the industrial printing device may be configured to execute professional printing services.

Professional printing services may be considered to not represent home use applications, but to represent printing procedures where the underlying printing layout comprises a resolution of substantially 1200 dpi (dots per inch) or higher.

Within the present context, the input stage may be considered a section of the industrial printing device, where raw material to be cut and to be printed is provided. In this regard, once the material is continuously treated by the industrial printing device, the treated material is continuously collected at the output stage. At the output stage, the finished material may be removed from the printing device.

Optionally, a priming stage is arranged downstream of the cutting stage and upstream of the printer stage. This means that the priming stage is arranged between the cutting stage and printer stage. The priming stage may be used to apply a ground coat to the cut material. Using the ground coat, the cut material may be prepared such that ink provided by the printer stage appropriately adheres to the ground coated material without any smearing. Therefore, high-quality printed products may be achieved.

Since the priming stage is arranged downstream of the cutting stage, the processed material, when being cut at the cutting stage, is not required to already comprise a lamination material layer. In this regard, the processed material may generally comprise various material layers, such as a printable material layer and a lamination material layer for wear resistance. Even if the material would comprise several material layers, it would be possible to in principle cut the material by a laser cutting device. However, treatment of a lamination material layer by a laser cutting device may potentially lead to unwanted local burning effects especially at the laminated cut edges. One measure to circumvent this problem in case of already printed material at known finishing devices is to unravel the lamination material layer from a remainder of the processed material, subsequently cut the remainder of the material, and laminate the cut material again. In contrast to such known finishing devices, according to some embodiments, such complex procedures may be avoided in the present case, as the cutting stage is arranged upstream of the printer stage and as the priming stage is provided only downstream of the cutting stage. Therefore, local burning effects may be avoided as the material processed at the cutting stage is not required to already comprise a lamination layer.

In some embodiments, the priming stage is at least configured to prime cut edges of the material such that the primed cut edges of the material are printable. Without the cut edges being primed, ink provided to the cut edges may smear over such that the quality of the printed products is limited. However, since the priming stage is arranged subsequent to the cutting stage, the cut material is coated with the ground coat also in view of cut edges established by the cutting process. Accordingly, the ink provided by the printer stage may also appropriately adhere to the cut edges having the ground coat according to the respective needs. Hence, the quality of the printed products is additionally improved.

Preferably, a web cleaning stage is provided downstream of the cutting stage and upstream of the priming stage. By means of the web cleaning stage impurities caused by the cutting process, such as due to released smoke or debris, may be removed before the ground coat is applied. Therefore, it may be avoided that impurities are already included within the coating of the ground coat. This leads to an additional improvement of the overall quality of the printed products.

Optionally, a buffer stage is provided downstream of the web cleaning stage and upstream of the priming stage. Since the material is continuously processed within the industrial printing device, the buffer stage may provide for a sufficient time period of the processed material to cool down before the ground coat is applied within the priming stage. The buffer system also allows time for the laser system to process and load the next cutting file, while the printing of the previous job may continue at different processing.

Also, in some embodiments, the web cleaning stage may apply fluid cleaning substances. In this case, the buffer stage may provide for a sufficient time period for the cleaning substances to volatilize from the cleaned portions of material. Therefore, it is ensured that the ground coat is applied directly to the clean material and is not affected by any other substances or, in an alternative, is applied to the material having an inappropriately high temperature.

Moreover, several buffer stages may be provided at different locations between the input stage and the output stage according to the respective needs.

Preferably, the industrial printing device comprises a single motion control device configured to control a motion of the material guided through different stages of the industrial printing device. As a consequence, the registration of the processed material in view of the different stages of the industrial printing device is controlled by a single motion control device. Accordingly, the registration of the processed material is simplified and improved such that it is guaranteed that the tools of the different stages are applied to appropriate portions of processed material.

Optionally, the single motion control is configured to ensure a registration between the material and the cutting stage. An accurate registration between the underlying material and the cutting stage ensures that the high precision provided by the laser cutting device is best made use of. Accordingly, high-quality cut blanks of the material are established. Advantageously, the same motion control device is applied for registration in view of the cutting procedure and the remaining treatments provided within the industrial printing device.

In some embodiments, the material is guided at a constant speed through the different stages of the industrial printing device. This means that the material is not needed to be slowed down for cutting the material by means of the laser cutting device. Rather, the laser cutting device is configured and arranged so as to cut the processed material at a speed which is equivalent to the printing speed provided by the printer stage. Put differently, compared to sole printing devices, a wide variety of cutting layouts is producible and printable without any need for a reduction of the production speed. Even further, compared to classic mechanical die-cutting procedures, no downtimes are required for changing the underlying cutting tools of the cutting stage.

Preferably, the motion control device comprises a unified tension control for the material throughout different stages of the industrial printing device. Therefore, it is ensured that the material is processed within the entire industrial printing device having applied a unified tension thereto at different stages of the printing device. Thereby, side effects such as stretching of the material are required to be considered only once since the tension applied to the processed material is homogeneous along the entire printing device.

According to a preferred embodiment of the invention a closed loop registration system could be used to maintain constant registration along and across the media. This closed loop could be based on image scanning or printed registration marks that sensors would read and the imaging processor could move or scale the image to match the cutting, if needed. This is a significant advantage of having the process inline (upstream or downstream). Nevertheless, in our case, the printing can start only of the die cutting has match the scanning requirement, in order to drive the ink waste to minimum.

Optionally, the printer stage comprises a flex or digital inkjet printer device. These printer devices provide high-quality printed products.

In certain instances, a digital inkjet printer device may be preferred if a contactless printing procedure is desired.

As another option, a thermobonding material may be applied for specific use cases.

The choice of the underlying printer device may also be motivated by the desired type of raw material to be processed.

Optionally, a cold foil stage may be provided downstream of the priming stage and upstream of the printer stage. A cold foil may then be applied to the primed cut material, e.g. for enlarging the material thickness before printing. This may be desired in case of specific applications so as to achieve robust printed products.

In some embodiments, a roll of blank (raw) material is provided at the input stage. Therefore, as long as blank material is still available at the input stage, the industrial printing device may continuously treat the processed material.

Preferably, a roll of finished material is collected at the output stage.

As an alternative, the cut and printed products, also named blanks, may be removed from a remainder of the processed material. In this case, a role of waste material is collected at the output stage, whereas the blanks may be removed from the industrial printing device through a separate outlet.

Optionally, downstream of the printer stage and upstream of the output stage at least one or any combination of an analog or digital embellishment stage, a varnish stage, and a matrix rewinding stage is provided. Accordingly, a finishing procedure may be provided to the printed products at the embellishment stage. Also, certain portions of the processed material, such as an underlying matrix may be collected at the matrix rewinding stage. In addition, a varnish may be provided so as to prevent the printed products from being damaged easily. Put differently, the varnish may provide a certain level of wear resistance.

Preferably, the industrial printing device may be configured to continuously provide cut and printed layouts at the output stage at a predefined minimum printing speed. Put differently, the material is guided through the industrial printing device at a minimum speed of more than 30 m/min. Preferably, the minimum speed is at least 50 m/min. More preferably, the minimum printing speed is at least 60 m/min. More preferably, the minimum printing speed is substantially 80 m/min. More preferably, the minimum printing speed is substantially 100 m/min.

According to another aspect, an industrial printing process performed by an industrial printing device is provided. The industrial printing process comprises at least the following steps:
Material is provided at an input stage of the industrial printing device.
The material is cut at a cutting stage of the industrial printing device using a laser cutting device.
The cut material is printed at a printer stage of the industrial printing device.
The printed material is outputted at an output stage of the industrial printing device.

The advantages achieved by the before mentioned industrial printing device are also achieved in view of the here described industrial printing process. In particular, no separate devices for laser cutting and printing of a material are required. Moreover, as the processed material is cut before being printed, cut edges of the cut material may be printed as well resulting in high-quality printed products.

Optionally, the industrial printing process makes use of an industrial printing device as described herein before.

All features and embodiments disclosed with respect to any aspect of the present disclosure are combinable alone or in (sub-)combination with any one of the remaining aspects of the present disclosure including each of the preferred embodiments thereof, provided the resulting combination of features is reasonable to a person skilled in the art.

The forgoing aspects and further advantages of the claimed subject matter will become more readily appreciated as the same become better understood by reference to the following detailed description when taken in conjunction with the accompanying drawings. In the drawings,
- Fig. 1 is a schematic drawing of an industrial printing device according to an embodiment, and
- Fig. 2 is a schematic drawing of an industrial printing process according to an embodiment.

All of the features disclosed hereinafter with respect to the example embodiments and/or the accompanying figures can alone or in any subcombination be combined with features of the aspects of the present disclosure including features of preferred embodiments thereof, provided the resulting feature combination is reasonable to a person skilled in the art.

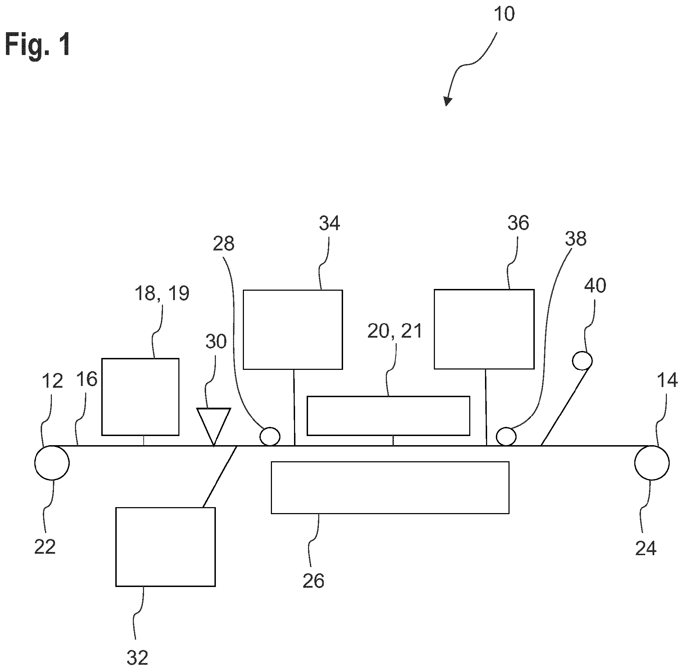

Fig. 1 is a schematic drawing of an industrial printing device 10 according to an embodiment.

The industrial printing device 10 comprises an input stage 12, an output stage 14, a band of processed material 16, a cutting stage 18, and a printer stage 20.

The cutting stage 18 and the printer stage 20 are arranged between the input stage 12 and the output stage 14. More specifically, the cutting stage 18 is arranged upstream of the printer stage 20 meaning that the processed material 16 is first treated by the cutting stage 18 and only then treated by the printer stage 20.

At the input stage 12, a roll of raw (blank) material 22 is provided. This material is processed as band of material 16 between the input stage 12 and the output stage 14.

At the output stage 14, a roll of finished material 24 is collected.

In an alternative, the finished material 24 may also not be collected as a roll, but may also be collected differently, such as a stack of individual printed products.

The cutting stage 18 comprises a laser cutting device 19.

According to this embodiment, the printer stage 20 comprises a flex or digital inkjet printer device 21.

The industrial printing device 10 also comprises a single motion control device 26, which is configured to guarantee a registration of the processed material 16 with devices of the various stages of the industrial printing device 10. Therefore, the processed material 16 is appropriately aligned for any treatment by devices of the stages, such as the laser cutting device 19 or the printer device 21. As only a single motion control device 26 is provided, the registration is ensured along the entire industrial printing device 10 meaning that the alignment has to be adjusted only once when setting up the machine.

In addition, the present industrial printing device 10 also comprises a generally optional priming stage 28, which is arranged downstream of the cutting stage 18 and upstream of the printer stage 20.

The priming stage 28 is configured to apply a ground coat to the processed material 16 after the material 16 is cut at the cutting stage 18.

According this embodiment, the industrial printing device 10 also comprises additional, generally optional, stages, such as a web cleaning stage 30, a buffer stage 32, a cold foil stage 34, an analog or digital embellishment stage 36, a varnish stage 38, and a matrix rewinding stage 40. In this regard, the web cleaning stage 30 is arranged downstream and subsequent to the cutting stage 18 while the buffer stage is arranged next to the web cleaning stage 30 and before the priming stage 28. Between the priming stage 28 and the printer stage 20, the cold foil stage 34 is arranged. Following the printer stage 20, the digital embellishment stage 36, the varnish stage 38, and the matrix rewinding stage 40 are arranged downstream thereof.

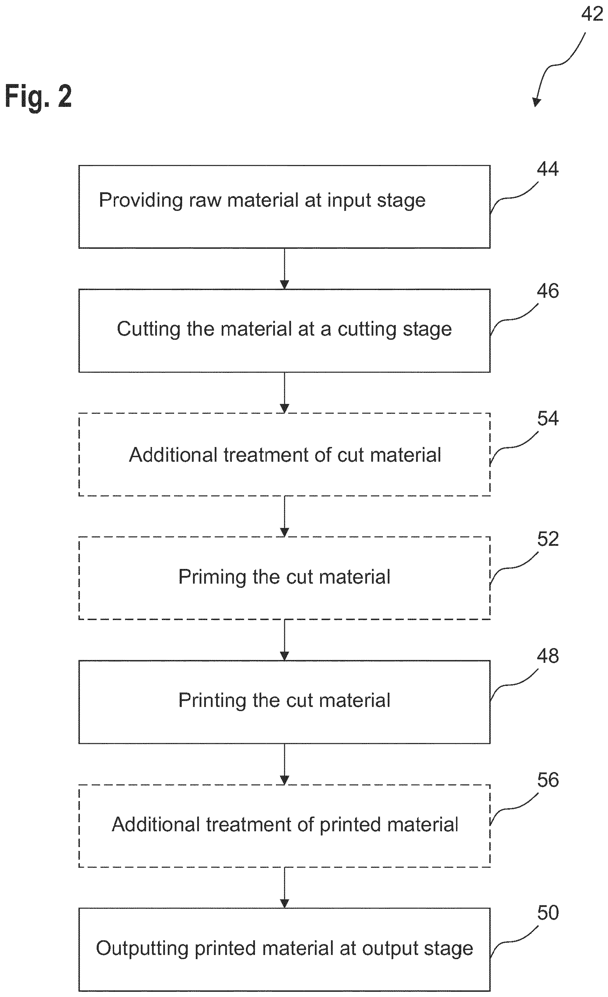

Fig. 2 is a schematic drawing of an industrial printing process 42 according to an embodiment. Optional steps are shown using dashed lines.

In step 44, raw (blank) material 22 is provided at the input stage 12 of the industrial printing device 10.

Subsequently, this raw (blank) material 22 is transported through the industrial printing device 10 representing processed material 16.

In step 46, the material 16 is cut at the cutting stage 18 of the industrial printing device 10 using a laser cutting device 19.

Then, the cut material 16 is printed at the printer stage 20 of the industrial printing device 10.

Finally, the printed material 16 is outputted at the output stage 14 of the industrial printing device 10.

Since the material 16 is cut first at the cutting stage 18, and only then, subsequently printed at the printer stage 20 downstream of the cutting stage 18, the cut edges of the material 16 may be printed as well. As a laser cutting device 19 is applied in step 46, various different cutting layouts may be considered for cutting the material 16. Even further, the cutting layouts may be varied during the processing of the material 16, i.e. the process 42 may include on-the-fly modifications of the cutting layout applied by the cutting stage 18. Accordingly, high-quality printed products may be achieved at low manufacturing expenses since no downtimes of the underlying industrial printing device 10 are required for changing between different cutting layouts. Also, no different cutting tools are required to be manufactured.

The process 42 may also comprise one or several additional, generally optional, steps. For example, in optional step 52, a ground coat may be applied at the priming stage 28 to the cut material 16. By means of the ground coat, ink applied by the printer stage 20 may better adhere to the primed material 16 compared to the case of omitting a ground coat. In particular, the ground coat may ensure that the ink also appropriately adheres to the cut edges of the cut material 16 such the quality of the printed products may be even improved. For example, the ground coat may prevent applied ink from smearing over across the material 16.

In optional step 54, at least one additional treatment may be applied to the processed material 16. In this regard, at least one or multiple of the web cleaning stage 30, the buffer stage 32, or the cold foil stage 34 may be applied. In case a cold foil is applied at the cold foil stage 34, the optional step 54 would be conducted subsequent to step 52, i.e. the treatment applied by the priming stage 28. However, treatments by the web cleaning stage 30 and the buffer stage 32 are generally applied prior to the treatment by the priming stage 28 in step 52.

Just as another option, the process 42 may also comprise additional optional treatment steps after the material 16 is printed in step 48. In this regard, one or multiple of the analog or digital embellishment stage 36, the varnish stage 38, and the matrix rewinding stage 40 may be applied.

Accordingly, based on the cutting stage 18 being prior to the printer stage 20, high-quality printed products may be obtained.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

## Claims

1. An industrial printing device (10) comprising at least an input stage (12), an output stage (14), a cutting stage (18), and a printer stage (20),
wherein the printer stage (20) is arranged between the input stage (12) and the output stage (14), wherein the cutting stage (18) is arranged upstream of the printer stage (20),
wherein the cutting stage (18) comprises a laser cutting device (19) such that material (16) is continuously processable between the input stage (12) and the output stage (14) by at least the cutting stage (18) and the printer stage (20).

2. The industrial printing device (10) of claim 1 comprising a priming stage (28) arranged downstream of the cutting stage (18) and upstream of the printer stage (20).

3. The industrial printing device (10) of claim 2, wherein the priming stage (28) is at least configured to prime cut edges of the material (16) such that the primed cut edges of the material (16) are printable.

4. The industrial printing device (10) of claims 1 or 2, wherein a web cleaning stage (30) is provided downstream of the cutting stage (18) and upstream of the priming stage (28).

5. The industrial printing device (10) of claim 4, wherein a buffer stage (32) is provided downstream of the web cleaning stage (30) and upstream of the priming stage (28).

6. The industrial printing device (10) of any one of the preceding claims comprising a single motion control device (26) configured to control a motion of the material (16) guided through different stages of the industrial printing device (10).

7. The industrial printing device (10) of claim 6, wherein the single motion control device (26) is configured to ensure a registration between the material (16) and the cutting stage (18).

8. The industrial printing device (10) of claims 6 or 7, wherein the material (16) is guided at a constant speed through the different stages of the industrial printing device (10).

9. The industrial printing device (10) of any one of claims 6 to 8, wherein the motion control device (26) comprises a unified tension control for the material (16) throughout different stages of the industrial printing device (10).

10. The industrial printing device (10) of any one of the preceding claims, wherein the printer stage (20) comprises a flex or digital inkjet printer device (21).

11. The industrial printing device (10) of any one of the preceding claims, wherein a roll of blank material (22) is provided at the input stage (12), and wherein a roll of finished material (24) is collected at the output stage (14).

12. The industrial printing device (10) of any one of the preceding claims, wherein downstream of the printer stage (20) and upstream of the output stage (14) at least one of an analog or digital embellishment stage (36), a varnish stage (38), and a matrix rewinding stage (40) is provided.

13. The industrial printing device (10) of any one of the preceding claims, wherein the material (16) is guided through the industrial printing device (10) at a minimum speed of 30 m per minute, preferably at a minimum speed of 50 m per minute, more preferably at a minimum speed of 60 m per minute, more preferably at a minimum speed of 80 m per minute, more preferably at a minimum speed of 100 m per minute.

14. An industrial printing process (42) performed by an industrial printing device (10) comprising at least the steps of:
- providing material (16) at an input stage (12) of the industrial printing device (10),
- cutting the material (16) at a cutting stage (18) of the industrial printing device (10) using a laser cutting device (19),
- printing the cut material (16) at a printer stage (20) of the industrial printing device (10), and
- outputting printed material (16) at an output stage (14) of the industrial printing device (10).

15. The industrial printing process according to claim 14, wherein the industrial printing device (10) is according to any one of claims 1 to 13.

## Patentansprüche

1. Industrielle Druckvorrichtung (10), die zumindest eine Eingabestufe (12), eine Ausgabestufe (14), eine Schneidestufe (18) und eine Druckerstufe (20) umfasst,
wobei die Druckerstufe (20) zwischen der Eingabestufe (12) und der Ausgabestufe (14) angeordnet ist, wobei die Schneidestufe (18) stromaufwärts der Druckerstufe (20) angeordnet ist,
wobei die Schneidestufe (18) eine Laserschneidvorrichtung (19) umfasst, so dass Material (16) zwischen der Eingabestufe (12) und der Ausgabestufe (14) durch zumindest die Schneidestufe (18) und die Druckerstufe (20) kontinuierlich verarbeitbar ist.

2. Industrielle Druckvorrichtung (10) nach Anspruch 1, die eine Grundierungsstufe (28) umfasst, die stromabwärts der Schneidestufe (18) und stromaufwärts der Druckstufe (20) angeordnet ist.

3. Industrielle Druckvorrichtung (10) nach Anspruch 2, wobei die Grundierungsstufe (28) zumindest dazu konfiguriert ist, Schnittkanten des Materials (16) so zu grundieren, dass die grundierten Schnittkanten des Materials (16) bedruckbar sind.

4. Industrielle Druckvorrichtung (10) nach Anspruch 1 oder 2, wobei eine Bahnreinigungsstufe (30) stromabwärts der Schneidestufe (18) und stromaufwärts der Grundierungsstufe (28) bereitgestellt ist.

5. Industrielle Druckvorrichtung (10) nach Anspruch 4, wobei eine Pufferstufe (32) stromabwärts der Bahnreinigungsstufe (30) und stromaufwärts der Grundierungsstufe (28) bereitgestellt ist.

6. Industrielle Druckvorrichtung (10) nach einem der vorstehenden Ansprüche, die eine einzelne Bewegungssteuerungsvorrichtung (26) umfasst, die dazu konfiguriert ist, eine Bewegung des Materials (16) zu steuern, das durch verschiedene Stufen der industriellen Druckvorrichtung (10) geführt wird.

7. Industrielle Druckvorrichtung (10) nach Anspruch 6, wobei die einzelne Bewegungssteuerungsvorrichtung (26) dazu konfiguriert ist, eine Ausrichtung zwischen dem Material (16) und der Schneidestufe (18) sicherzustellen.

8. Industrielle Druckvorrichtung (10) nach Anspruch 6 oder 7, wobei das Material (16) mit einer konstanten Geschwindigkeit durch die verschiedenen Stufen der industriellen Druckvorrichtung (10) geführt wird.

9. Industrielle Druckvorrichtung (10) nach einem der Ansprüche 6 bis 8, wobei die Bewegungssteuerungsvorrichtung (26) eine einheitliche Spannungssteuerung für das Material (16) in allen verschiedenen Stufen der industriellen Druckvorrichtung (10) umfasst.

10. Industrielle Druckvorrichtung (10) nach einem der vorstehenden Ansprüche, wobei die Druckerstufe (20) eine Flex- oder digitale Tintenstrahldruckvorrichtung (21) umfasst.

11. Industrielle Druckvorrichtung (10) nach einem der vorstehenden Ansprüche, wobei an der Eingabestufe (12) eine Rolle unbedruckten Materials (22) bereitgestellt wird und an der Ausgabestufe (14) eine Rolle fertigen Materials (24) gesammelt wird.

12. Industrielle Druckvorrichtung (10) nach einem der vorstehenden Ansprüche, wobei stromabwärts der Druckerstufe (20) und stromaufwärts der Ausgabestufe (14) zumindest eine einer analogen oder digitalen Verschönerungsstufe (36), einer Lackstufe (38) und einer Matrixrückspulstufe (40) bereitgestellt ist.

13. Industrielle Druckvorrichtung (10) nach einem der vorstehenden Ansprüche, wobei das Material (16) mit einer Mindestgeschwindigkeit von 30 m pro Minute, bevorzugt mit einer Mindestgeschwindigkeit von 50 m pro Minute, bevorzugter mit einer Mindestgeschwindigkeit von 60 m pro Minute, bevorzugter mit einer Mindestgeschwindigkeit von 80 m pro Minute, bevorzugter mit einer Mindestgeschwindigkeit von 100 m pro Minute durch die industrielle Druckvorrichtung (10) geführt wird.

14. Industrieller Druckprozess (42), der von einer industriellen Druckvorrichtung (10) durchgeführt wird, umfassend zumindest die folgenden Schritte:
- Bereitstellen von Material (16) an einer Eingabestufe (12) der industriellen Druckvorrichtung (10),
- Schneiden des Materials (16) an einer Schneidestufe (18) der industriellen Druckvorrichtung (10) mittels einer Laserschneidvorrichtung (19),
- Bedrucken des geschnittenen Materials (16) in einer Druckerstufe (20) der industriellen Druckvorrichtung (10) und
- Ausgeben von Druckmaterial (16) an einer Ausgabestufe (14) der industriellen Druckvorrichtung (10).

15. Industrieller Druckprozess nach Anspruch 14, wobei die industrielle Druckvorrichtung (10) nach einem der Ansprüche 1 bis 13 ist.

## Revendications

1. Dispositif d'impression industrielle (10) comprenant au moins une étape d'entrée (12), une étape de sortie (14), une étape de découpe (18) et une étape d'impression (20),
dans lequel l'étape d'impression (20) est agencée entre l'étape d'entrée (12) et l'étape de sortie (14), dans lequel l'étape de découpe (18) est agencée en amont de l'étape d'impression (20),
dans lequel l'étape de découpe (18) comprend un dispositif de découpe laser (19) de telle sorte que le matériau (16) puisse être traité en continu entre l'étape d'entrée (12) et l'étape de sortie (14) par au moins l'étape de découpe (18) et l'étape d'impression (20).

2. Dispositif d'impression industrielle (10) selon la revendication 1 comprenant une étape d'apprêt (28) agencée en aval de l'étape de découpe (18) et en amont de l'étape d'impression (20).

3. Dispositif d'impression industrielle (10) selon la revendication 2, dans lequel l'étape d'apprêt (28) est au moins configurée pour apprêter des bords coupés du matériau (16) de telle sorte que les bords coupés apprêtés du matériau (16) puissent être imprimés.

4. Dispositif d'impression industrielle (10) selon les revendications 1 ou 2, dans lequel une étape de nettoyage de bande (30) est présente en aval de l'étape de découpe (18) et en amont de l'étape d'apprêt (28).

5. Dispositif d'impression industrielle (10) selon la revendication 4, dans lequel une étape tampon (32) est présente en aval de l'étape de nettoyage de bande (30) et en amont de l'étape d'apprêt (28).

6. Dispositif d'impression industrielle (10) selon l'une quelconque des revendications précédentes, comprenant un dispositif de commande de mouvement unique (26) configuré pour commander un mouvement du matériau (16) guidé à travers différentes étapes du dispositif d'impression industrielle (10).

7. Dispositif d'impression industrielle (10) selon la revendication 6, dans lequel le dispositif de commande de mouvement unique (26) est configuré pour assurer un alignement entre le matériau (16) et l'étape de découpe (18).

8. Dispositif d'impression industrielle (10) selon les revendications 6 ou 7, dans lequel le matériau (16) est guidé à une vitesse constante à travers les différents étapes du dispositif d'impression industrielle (10).

9. Dispositif d'impression industrielle (10) selon l'une quelconque des revendications 6 à 8, dans lequel le dispositif de commande de mouvement (26) comprend une commande de tension unifiée pour le matériau (16) à travers différents étapes du dispositif d'impression industrielle (10).

10. Dispositif d'impression industrielle (10) selon l'une quelconque des revendications précédentes, dans lequel l'étape d'impression (20) comprend un dispositif d'impression à jet d'encre flex ou numérique (21).

11. Dispositif d'impression industrielle (10) selon l'une quelconque des revendications précédentes, dans lequel un rouleau de matériau vierge (22) est disposé à l'étape d'entrée (12) et dans lequel un rouleau de matériau fini (24) est collecté à l'étape de sortie (14).

12. Dispositif d'impression industrielle (10) selon l'une quelconque des revendications précédentes, dans lequel en aval de l'étape d'impression (20) et en amont de l'étape de sortie (14) est présente au moins l'une d'une étape d'embellissement analogique ou numérique (36), d'une étape d'application de vernis (38) et d'une étape de rembobinage de matrice (40).

13. Dispositif d'impression industrielle (10) selon l'une quelconque des revendications précédentes, dans lequel le matériau (16) est guidé à travers le dispositif d'impression industrielle (10) à une vitesse minimale de 30 m par minute, de préférence à une vitesse minimale de 50 m par minute, plus préférentiellement à une vitesse minimale de 60 m par minute, plus préférentiellement à une vitesse minimale de 80 m par minute, plus préférentiellement à une vitesse minimale de 100 m par minute.

14. Processus d'impression industrielle (42) réalisé par un dispositif d'impression industrielle (10) comprenant au moins les étapes de :
- fourniture d'un matériau (16) au niveau d'une étape d'entrée (12) du dispositif d'impression industrielle (10),
- découpe du matériau (16) au niveau d'une étape de découpe (18) du dispositif d'impression industrielle (10) à l'aide d'un dispositif de découpe laser (19),
- impression du matériau découpé (16) au niveau d'une étape d'impression (20) du dispositif d'impression industrielle (10), et
- production en sortie d'un matériau imprimé (16) au niveau d'une étape de sortie (14) du dispositif d'impression industrielle (10).

15. Processus d'impression industrielle selon la revendication 14, dans lequel le dispositif d'impression industrielle (10) est conforme à l'une quelconque des revendications 1 à 13.
